# EUROPEAN PATENT APPLICATION

(11) **EP 1 331 821 A2**
(43) Date of publication of application: **30.07.2003**
(21) Application number: 02017073.4
(22) Date of filing: 29.07.2002
(51) Int. Cl.: H04N 7/24, H04N 5/00

(54) **Recording/playback apparatus**

(30) Priority: 29.01.2002 JP 2002020689
(71) Applicant: Kabushiki Kaisha Toshiba, Tokyo (JP)
(72) Inventor: Oka, Hiroyuki, 1-chome, Minato-ku, Tokyo 105-8001 (JP); Inoue, Yoshinori, 1-chome, Minato-ku, Tokyo 105-8001 (JP)
(74) Representative: Henkel, Feiler, Hänzel

(57) **Abstract**

This invention provides an apparatus capable of performing time slip playback even upon occurrence of a network trouble. This invention relates to an apparatus which, when a network trouble occurs (51), acquires (56), of multimedia data, a point representing the position of multimedia data which has already been transmitted to a network, and after the network recovers (51), transmits (56, 58) multimedia data subsequent to the point to the network.

## Description

The present invention relates to a recording/playback apparatus capable of playing back multimedia data while recording it.

New recording/playback systems have recently been developed. According to this system, a recording/playback apparatus and an information processing apparatus (e.g., personal computer, PDA, or portable telephone) are connected by a network. While recording digital media data such as TV images, video images, or the like in a storage device (HDD, optical disk, or the like), the recording/playback apparatus transmits the multimedia data to the information processing apparatus. The information processing apparatus plays back the transmitted multimedia data.

The recording/playback system can issue an instruction as of playback, fast forward, rewind, or pause from the information processing apparatus to the recording/playback apparatus. The recording/playback apparatus performs an operation based on an instruction from the information processing apparatus while recording digital media data.

When the information processing apparatus designates playback, the recording/playback apparatus plays back digital media data (transmits digital media data to the information processing apparatus) while recording it (time slip playback or time-shift playback).

If a trouble occurs in a network while the recording/playback apparatus plays back digital media data, the recording/playback apparatus stops time slip playback including recording of digital media data and transmission of the digital media data to the information processing apparatus.

Even if the network recovers, the recording/playback apparatus keeps stopping time slip playback including recording of digital media data and transmission of the digital media data to the information processing apparatus. The recording/playback system cannot resume time slip playback.

The present invention has been made in consideration of the above situation, and has as its object to provide a recording/playback apparatus capable of performing time slip playback even upon occurrence of a network trouble.

To achieve the above objects, according to the present invention, there is provided a n apparatus which transmits multimedia data to be played back to a network, comprising: means for, when a trouble of the network is detected, stopping transmission of the multimedia data; means for acquiring a point representing a position of the multimedia data obtained when transmission of the multimedia data is stopped; and means for retransmitting the multimedia data to the network from the point acquired by the acquiring means.

According to another aspect of the present invention, there is provided an apparatus which transmits multimedia data to be played back to a network, comprising: means for transmitting the multimedia data to the network; means for, when a trouble of the network is detected, stopping transmission of the multimedia data; means for acquiring a point representing a position of the multimedia data obtained when transmission of the multimedia data is stopped; means for transmitting the point acquired by the acquiring means to the network on the basis of a point acquisition request; and means for transmitting the multimedia data to the,network on the basis of a multimedia data acquisition request in response to the transmitted point.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view for explaining the use environment of a recording/playback system according to an embodiment of the present invention;
FIG. 2 is a block diagram showing the arrangement of a recording/playback apparatus;
FIG. 3 is a block diagram showing the arrangement of a PC;
FIG. 4 is a functional block diagram showing the recording/playback apparatus according to the embodiment of the present invention;
FIG. 5 is a flow chart for explaining the operation of the recording/playback apparatus according to the embodiment of the present invention;
FIG. 6 is a view for explaining the concept of time slip playback;
FIG. 7 is a functional block diagram showing a recording/playback apparatus according to another embodiment of the present invention;
FIG. 8 is a functional block diagram showing the PC; and
FIG. 9 is a flow chart for explaining the operation of a recording/playback system including the recording/playback apparatus according to the embodiment of the present invention.

A recording/playback system according to an embodiment of the present invention will be described below with reference to the several views of the accompanying drawing.

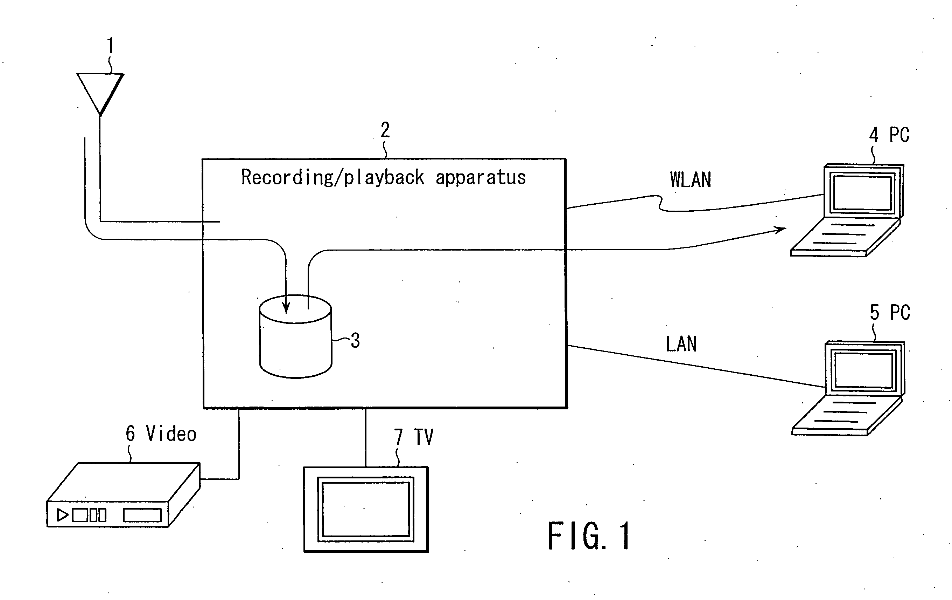

FIG. 1 is a view for explaining the use environment of the recording/playback system according to the embodiment of the present invention.

As shown in FIG. 1, a recording/playback apparatus 2 according to the embodiment stores a television image received by a TV antenna 1 in a storage device 3 while transmitting the television image stored in the storage device 3 to personal computers (to be referred to as PCs hereinafter) 4 and 5 via a WLAN (Wireless Local Area Network) or LAN (Local Area Network) (time slip playback). The PCs 4 and 5 play back the television image transmitted from the recording/playback apparatus 2, and instruct the recording/playback apparatus to perform fast forward, rewind, or pause.

The recording/playback apparatus 2 can be connected to a videocassette recorder 6, television 7, and the like. The recording/playback apparatus 2 can also perform time slip playback of a video image input from the videocassette recorder 6. The recording/playback apparatus 2 can display a TV image received by the TV antenna 1 on the television 7.

The image is a television image in FIG. 1, but may be any multimedia data such as audio data or video data. A device which plays back multimedia data transmitted from the recording/playback apparatus is not limited to a PC, and may be an information processing apparatus such as a PDA (Personal Digital Assistant) or portable telephone. Examples of the storage device 3 are an HDD, optical disk, MO, and memory card.

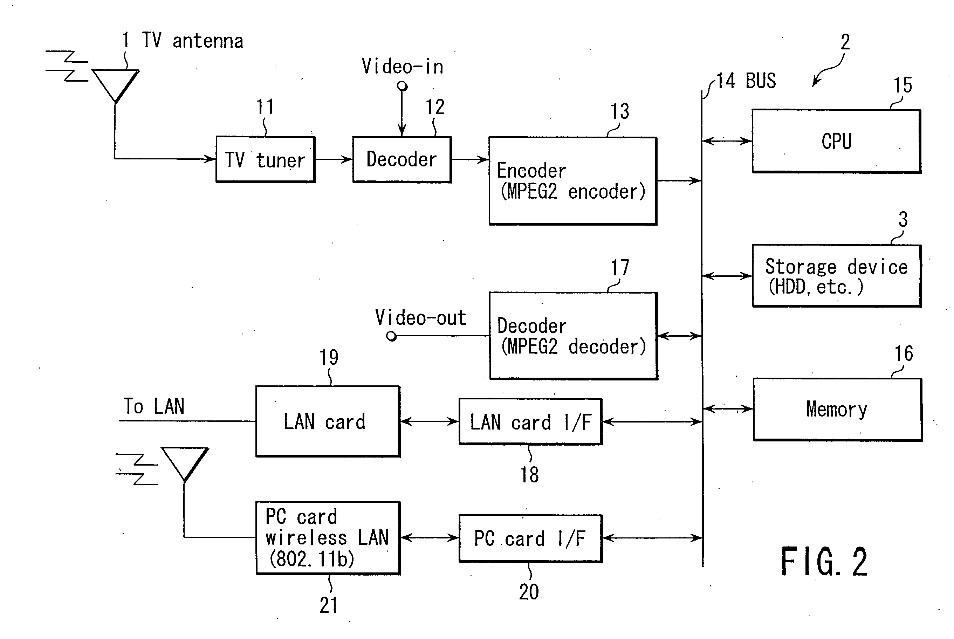

FIG. 2 is a block diagram showing the arrangement of the recording/playback apparatus. The same reference numerals as in FIG. 1 denote the same parts.

As shown in FIG. 2, the recording/playback apparatus 2 comprises an encoder 13, a decoder 17, a CPU 15, the storage device 3, a memory 16, a LAN card interface 18, and a PC card interface 20, all of which are connected to a bus 14.

The encoder 13 is connected to the TV antenna 1 via a decoder 12 and TV tuner 11. The encoder 13 compresses and outputs TV image data (multimedia data) which is received by the TV antenna 1 and input via the TV tuner 11 and decoder 12. The encoder 13 is, e.g., an MPEG2 encoder.

The CPU 15 controls the whole recording/playback apparatus 2, and executes a program for implementing the operation of the recording/playback apparatus (to be described later).

The storage device 3 stores a resume point representing the position (played-back position) of a multimedia data portion which has been transmitted to the PC. The storage device 3 stores a program for implementing the operation of the recording/playback apparatus.

The decoder 17 decodes multimedia data encoded by the encoder and outputs the data to a video output terminal. The decoder 17 is, e.g., an MPEG2 decoder.

The memory 16 stores a program which is installed and is to be executed by the recording/playback apparatus. The memory 16 has various arithmetic areas.

The LAN card interface 18 is an interface for connecting the bus 14 and a LAN card 19. The PC card interface 20 is an interface for connecting the bus 14 and a PC card wireless LAN 21. The LAN card 19 communicates with a PC serving as a terminal via a network. The PC card wireless LAN 21 communicates with a PC serving as a terminal via a wireless network.

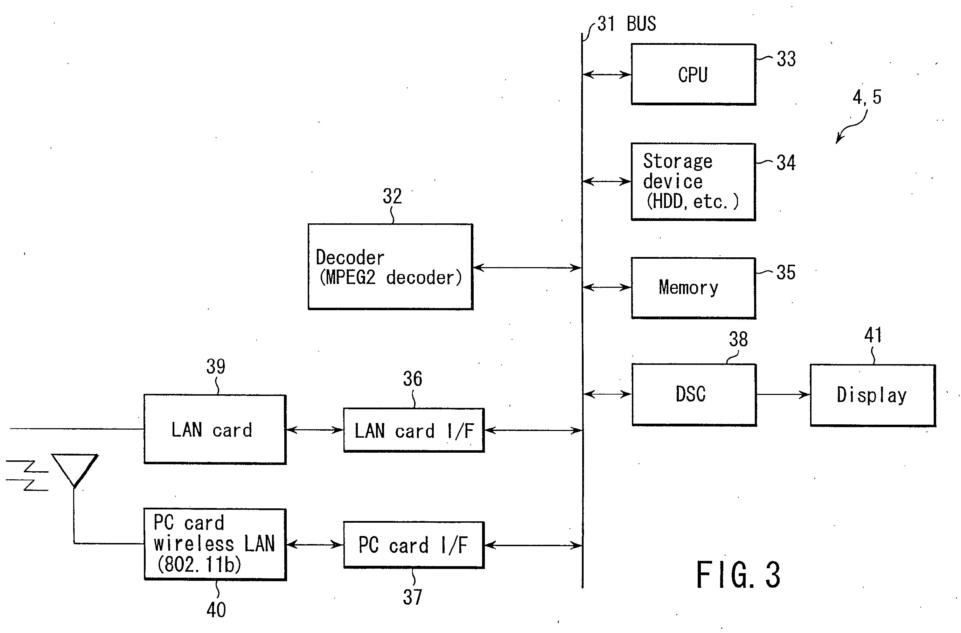

FIG. 3 is a block diagram showing the arrangement of the PC.

As shown in FIG. 3, the PC according to the embodiment of the present invention comprises a decoder 32, CPU 33, storage device 34, memory 35, LAN card interface 36, PC card interface 37, and display controller 38, all of which are connected to a bus 31.

The decoder 32 decompresses multimedia data compressed by the encoder of the recording/playback apparatus. The decoder 32 is, e.g., an MPEG2 decoder.

The CPU 33 controls the overall PC, and executes a program for realizing the operation of the PC (to be described later).

The storage device 34 stores multimedia data transmitted from the PC and a program for realizing the operation of the PC.

The memory 35 stores a program which is installed and is to be executed by the recording/playback apparatus. The memory 35 has various arithmetic areas.

The LAN card interface 36 is an interface for connecting the bus 31 and a LAN card 39. The PC card interface 37 is an interface for connecting the bus 31 and a PC card wireless LAN 40. The LAN card 39 communicates with a PC serving as a terminal via a network. The PC card wireless LAN 40 communicates with a PC serving as a terminal via a wireless network.

The display controller (DSC) 38 performs the entire display control, plays back multimedia data decompressed by the decoder 32, and displays the data on a display 41.

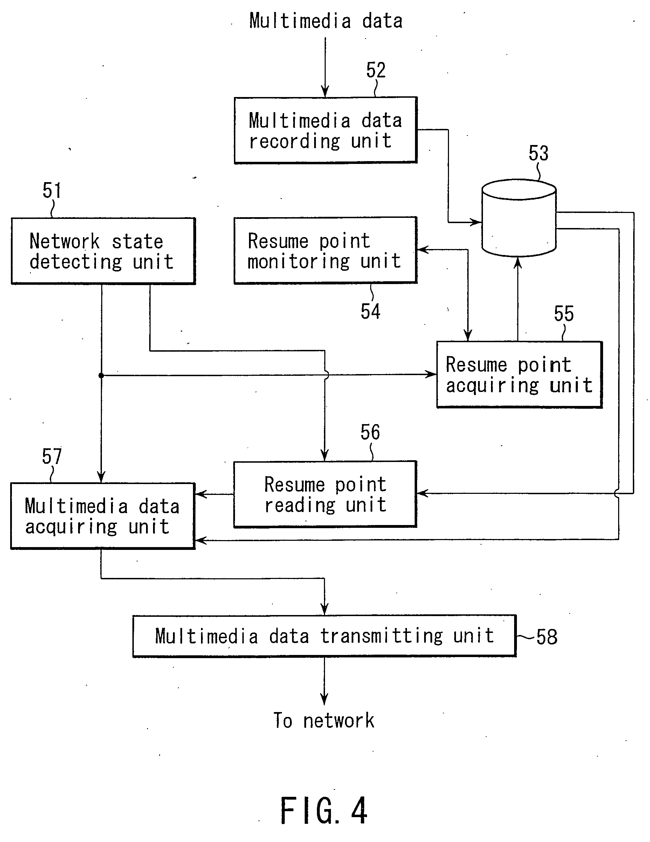

FIG. 4 is a functional block diagram showing the recording/playback apparatus according to the embodiment of the present invention.

As shown in FIG. 4, the recording/playback apparatus according to the embodiment of the present invention comprises a network state detecting unit 51, multimedia data recording unit 52, storage unit 53, resume point monitoring unit 54, resume point acquiring unit 55, resume point reading unit 56, multimedia data acquiring unit 57, and multimedia data transmitting unit 58.

The network state detecting unit 51 detects the network state of a network connected to a PC. More specifically, the network state detecting unit 51 detects a network trouble such as disconnection of the network, or recovery of the network after occurrence of a network trouble.

The multimedia data recording unit 52 stores in the storage unit 53 multimedia data which is input to the recording/playback apparatus and compressed by the encoder.

The resume point monitoring unit 54 always monitors, of multimedia data stored in the storage unit 53, a resume point representing the position of a multimedia data portion which has been transmitted to the PC. The resume point is expressed by the playback time from the header of a multimedia data file, the file size, or the like.

The resume point acquiring unit 55 acquires a resume point from the resume point monitoring unit 54 and stores it in the storage unit 53 when the network state detecting unit 51 detects a network trouble.

The resume point reading unit 56 reads out the resume point stored in the storage unit 53 when the network state detecting unit 51 detects the network trouble.

The multimedia data acquiring unit 57 acquires from the storage unit 53 multimedia data from the resume point read out by the resume point reading unit 56 when the network state detecting unit 51 detects the network trouble.

The multimedia data transmitting unit 58 transmits the multimedia data acquired by the multimedia data acquiring unit 57 to the PC via the network.

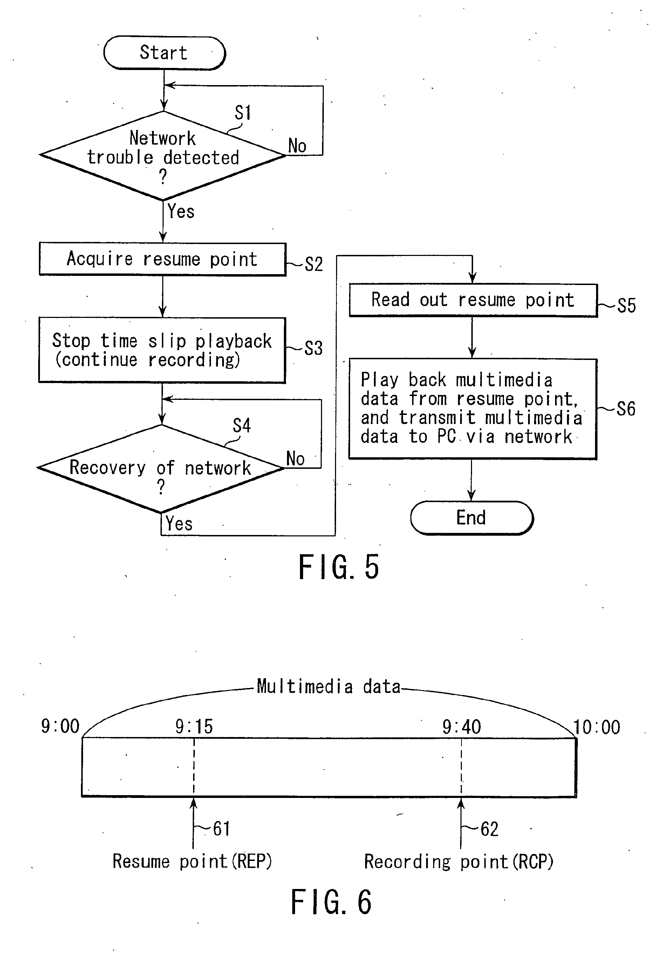

The operation of the recording/playback apparatus according to the embodiment of the present invention will be explained with reference to the flow chart of FIG. 5.

Assume that the recording/playback apparatus is in a time slip playback state. That is, the recording/playback apparatus transmits multimedia data to the PC while recording input multimedia data.

In this case, if a network trouble in the network connected to the PC is detected, a resume point upon network detection is acquired (S1 and S2). Transmission of multimedia data to the PC is stopped (time slip playback is stopped), but recording of multimedia data continues (S3).

FIG. 6 is a view for explaining the concept of time slip playback.

FIG. 6 shows a resume point 61 representing the position of data which is being played back (transmitted to the PC) in the presence of a multimedia data file, and a recording point 62 representing a current recording position.

In the embodiment of the present invention, if a network trouble occurs, the resume point is acquired but recording continues. Thus, the recording point 62 proceeds (recording continues).

Whether the network has recovered is checked (S4), and if Yes in S4, the resume point is read out (S5) and time slip playback is resumed from the resume point (S6). In other words, multimedia data from the resume point is transmitted to the PC. The PC plays back the multimedia data even after recovery of the network.

The recording/playback apparatus according to the embodiment of the present invention acquires a resume point upon occurrence of a network trouble while continuing recording. The recording/playback apparatus can resume time slip playback from the acquired resume point after recovery of the network.

### <Another Embodiment>

A recording/playback apparatus according to another embodiment of the present invention will be described.

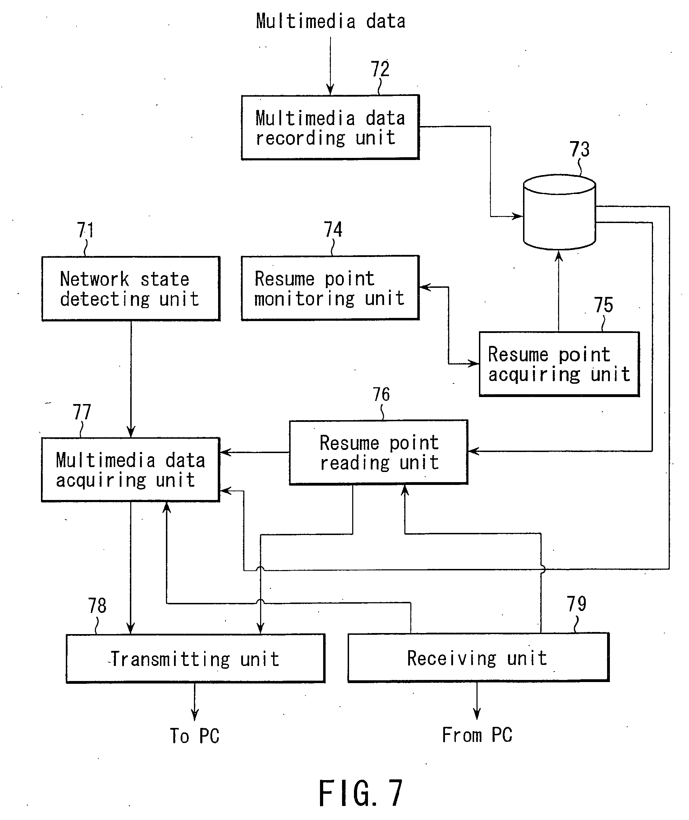

FIG. 7 is a functional block diagram showing the recording/playback apparatus according to the embodiment of the present invention.

As shown in FIG. 7, the recording/playback apparatus according to the embodiment of the present invention comprises a network state detecting unit 71, multimedia data recording unit 72, storage unit 73, resume point monitoring unit 74, resume point acquiring unit 75, resume point reading unit 76, multimedia data acquiring unit 77, transmitting unit 78, and receiving unit 79.

The network state detecting unit 71 detects the network state of a network connected to a PC. More specifically, the network state detecting unit 71 detects a network trouble such as disconnection of the network, or recovery of the network after occurrence of a network trouble.

The multimedia data recording unit 72 stores in the storage unit 73 multimedia data which is input to the recording/playback apparatus and compressed by an encoder.

The resume point monitoring unit 74 always monitors, of multimedia data stored in the storage unit 73, a resume point representing the position of a multimedia data portion which has been transmitted to the PC. The resume point is expressed by the playback time from the header of a multimedia data file, the file size, or the like.

The resume point acquiring unit 75 acquires a resume point from the resume point monitoring unit 74 and stores it in the storage unit 73 when the network state detecting unit 71 detects a network trouble.

The resume point reading unit 76 reads out the resume point stored in the storage unit 73 upon reception of a resume point read request from the PC.

When receiving a multimedia data acquisition request based on the resume point from the PC, the multimedia data acquiring unit 77 acquires, from a storage unit 3 on the basis of the multimedia data acquisition request, multimedia data from the resume point read out by the resume point reading unit 76.

The transmitting unit 78 transmits to the PC the multimedia data acquired by the multimedia data acquiring unit 77 and the resume point read out by the resume point reading unit 76.

The receiving unit 79 outputs a multimedia data acquisition request from the PC to the multimedia data acquiring unit 77, and outputs a resume point read request from the PC to the resume point reading unit 76.

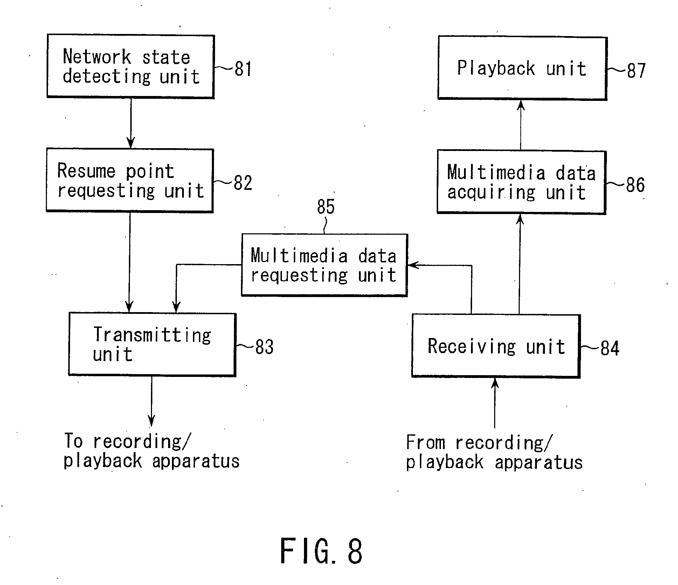

FIG. 8 is a functional block diagram showing the PC.

As shown in FIG. 8, the PC serving as a terminal of the recording/playback apparatus according to the embodiment of the present invention comprises a network state detecting unit 81, resume point requesting unit 82, transmitting unit 83, receiving unit 84, multimedia data requesting unit 85, multimedia data acquiring unit 86, and playback unit 87.

The network state detecting unit 81 detects recovery of a network after occurrence of a network trouble.

The resume point requesting unit 82 generates a resume point read request when the network state detecting unit 81 detects recovery of the network.

The transmitting unit 83 outputs to the recording/playback apparatus the resume point read request generated by the resume point requesting unit 82, and a multimedia data request output from the multimedia data requesting unit.

The receiving unit 84 outputs multimedia data received from the recording/playback apparatus to the multimedia data acquiring unit 86, and outputs a resume point to the multimedia data requesting unit 85.

Based on a resume point sent from the recording/playback apparatus, the multimedia data requesting unit 85 generates a multimedia data request for acquiring multimedia data from the resume point.

The multimedia data acquiring unit 86 acquires multimedia data received from the recording/playback apparatus and outputs it to the playback unit 87. The playback unit 87 plays back the multimedia data output from the multimedia data acquiring unit 86.

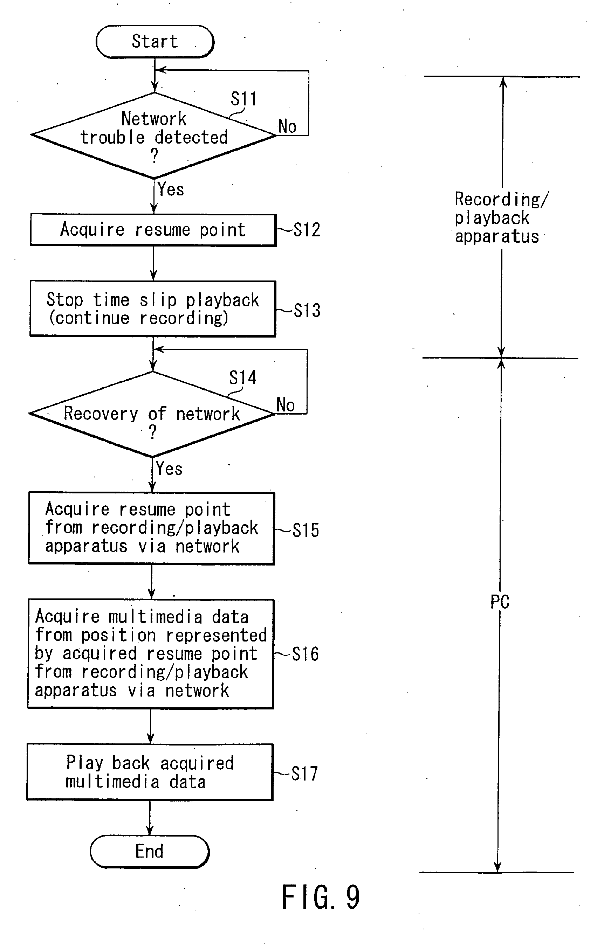

The operation of a recording/playback system including the recording/playback apparatus according to the embodiment of the present invention will be explained with reference to FIG. 9.

Assume that the recording/playback apparatus is in a time slip playback state. That is, the recording/playback apparatus transmits multimedia data to the PC while recording input multimedia data.

In this case, if a network trouble in the network connected to the PC is detected, a resume point upon network detection is acquired (S11 and S12). Transmission of multimedia data to the PC is stopped (time slip playback is stopped), but recording of multimedia data continues (S13).

Whether the network has recovered is checked (S14), and if Yes in S14, the PC outputs a resume point read request to acquire a resume point from the recording/playback apparatus via the network (S15).

Based on the acquired resume point, the PC outputs to the recording/playback apparatus a multimedia data request for acquiring multimedia data from a position represented by the resume point. The PC acquires multimedia data subsequent to the position represented by the acquired resume point from the recording/playback apparatus via the network (S16). The PC plays back the acquired multimedia data (S17).

The recording/playback system according to the embodiment acquires a resume point on the PC side even if a network trouble occurs. The system can acquire multimedia data from the position represented by the resume point, and continuously play back the multimedia data.

In the above-described embodiments, when a network trouble occurs, playback stops while recording continues. A resume point is acquired, and multimedia data is played back from the position represented by the resume point. Alternatively, playback may not stop but suspend.

The present invention is not limited to the above-described embodiments, and can be variously modified without departing from the spirit and scope of the invention in practical use. The respective embodiments can be combined as properly as possible. In this case, the effects of the combination can be obtained. The embodiments include inventions on various stages, and various inventions can be extracted by an appropriate combination of building components disclosed. For example, when an invention is extracted by omitting several building components from all those described in the embodiments, the omission is properly compensated for by a well-known technique in practicing the extracted invention.

As has been described in detail above, the present invention can provide a recording/playback apparatus capable of performing time slip playback even upon occurrence of a network trouble. The present invention can also provide an information processing apparatus and recording/playback system using the above recording/playback apparatus.

## Claims

1. An apparatus which transmits multimedia data to be played back to a network, **characterized by** comprising:
means (51, 58) for, when a trouble of the network is detected, stopping transmission of the multimedia data;
means (55) for acquiring a point representing a position of the multimedia data obtained when transmission of the multimedia data is stopped; and
means (54-58) for retransmitting the multimedia data to the network from the point acquired by the acquiring means.

2. An apparatus according to claim 1, **characterized by** further comprising,
means for storing the multimedia data in a storage device, and
means for reading out the multimedia data from the storage device and transmitting the readout multimedia data to the network.

3. An apparatus which transmits multimedia data to be played back to a network, **characterized by** comprising:
means (78) for transmitting the multimedia data to the network;
means (71, 78) for, when a trouble of the network is detected, stopping transmission of the multimedia data;
means (75) for acquiring a point representing a position of the multimedia data obtained when transmission of the multimedia data is stopped;
means (76, 78) for transmitting the point acquired by said acquiring means to the network on the basis of a point acquisition request; and
means (77, 78) for transmitting the multimedia data to the network on the basis of a multimedia data acquisition request in response to the transmitted point.

4. An apparatus according to claim 3, **characterized by** further comprising,
means for storing the multimedia data in a storage device, and
means for reading out the multimedia data from the storage device.

5. An apparatus according to claim 1 or 3, **characterized by** further comprising, means for monitoring, of the multimedia data, the point representing a position of a multimedia data portion which is transmitted by said transmitting means.

6. An apparatus according to claim 1 or 3, **characterized by** further comprising, means for detecting the trouble of the network based on a state of the network.

7. An apparatus according to claim 1 or 4, **characterized in that** the means for stopping stops the transmission of the multimedia data while storing the multimedia data in said means for storing.

8. An apparatus according to claim 4, **characterized by** further comprises compressing means for compressing the multimedia data and in which said means for storing stores the multimedia data compressed by said compressing means.

9. An information processing apparatus which receives multimedia data to be played back via a network, and plays back the received multimedia data, **characterized by** comprising:
means for detecting a state of the network;
means for, when recovery of the network is detected, acquiring a point representing a position of a multimedia data portion transmitted to said information processing apparatus;
means for acquiring via the network the multimedia data from the position represented by the acquired point; and
means for playing back the acquired multimedia data.

10. An apparatus according to claim 9, **characterized in that** said playback means decompresses the multimedia data acquired, and plays back the decompressed multimedia data.

11. A recording/playback method in a recording/playback apparatus which transmits multimedia data to be played back to a network, **characterized by** comprising:
stopping transmission of the multimedia data when a trouble of the network is detected;
acquiring a point representing a position of the multimedia data obtained when transmission of the multimedia data is stopped; and
retransmitting the multimedia data to the network from the point acquired.

12. A recording/playback method according to claim 11, **characterized by** further comprising,
storing the multimedia data in a storage device, and
reading out the multimedia data from the storage device and transmitting the readout multimedia data to the network.

13. A recording/playback method in a recording/playback apparatus which transmits multimedia data to a network, **characterized by** comprising:
transmitting the multimedia data to the network;
stopping transmission of the multimedia data when a trouble of the network is detected;
acquiring a point representing a position of the multimedia data obtained when transmission of the multimedia data is stopped;
transmitting the point acquired to the network on the basis of a point acquisition request; and
transmitting the multimedia data to the network on the basis of a multimedia data acquisition request in response to the transmitted point.

14. A recording/playback method according to claim 11 or 13, **characterized by** further comprising, monitoring, of the multimedia data, the point representing a position of a multimedia data portion which is transmitted.

15. A recording/playback method according to claim 11 or 13, **characterized by** further comprising, detecting the trouble of the network based on a state of the network.
